# EUROPEAN PATENT SPECIFICATION

(11) **EP 1 660 760 B1**
(45) Date of publication and mention of the grant of the patent: **13.08.2008**
(21) Application number: 03818076.6
(22) Date of filing: 14.08.2003
(51) Int. Cl.: F01D 17/14, F04D 27/02, F04D 29/46

(54) **VARIABLE DIFFUSER WITH MOVABLE WALL**
VERSTELLBARER DIFFUSOR MIT BEWEGLICHER WAND
DIFFUSEUR VARIABLE A PAROI MOBILE

(43) Date of publication of application: 31.05.2006
(73) Proprietor: Honeywell International, Inc., Morristown, New Jersey 07962 (US)
(72) Inventor: MCARDLE, Nathan, John, Outlane, Lancashire HD3 3FH (GB); ASPEY, Peter, Penwortham Preston, Lancashire PRI OHY (GB); CHEN, Hua, Great Harwood Blackburn, Lancashire BB6 (GB); CONNOR, Bill, Atherton, Manchester, Lancashire M46 9QQ (GB); ROBERTS, Quentin, Swinley, Lancashire WN1 2DQ (GB)
(74) Representative: TBK-Patent
(86) International application number: PCT/EP2003/009061
(87) International publication number: WO 2005/017321

(56) References cited:
- EP-A- 0 654 587
- GB-A- 1 231 152
- US-A- 4 403 914
- US-A- 4 416 583
- US-A- 4 544 325
- US-A- 6 139 262

## Description

The present invention relates to a variable nozzle device according to the preamble of claim 1 which is applicable to a turbocharger .

Turbochargers in particular for internal combustion engines are conventionally used in order to reduce the fuel consumption and to increase the output of the internal combustion engine.

Since internal combustion engines are subject to widely varying operational states such as rotational speeds and load conditions, the turbocharger also experiences differing conditions such as the exhaust flow rate, operational temperatures, or the like. Furthermore, intake requirements of pressurized intake air discharged from the compressor of the turbocharger differ in response to the variation of the operational conditions of the internal combustion engine.

Therefore, turbochargers have been developed which enable an adaptation to current operational conditions not only on the turbine side of the turbocharger, but also on the compressor side thereof. The adaptation to operational conditions on the compressor side includes, for example, the variation of the geometry of the compressor.

Documents US-4,886,416 and WO-0020726 disclose variable nozzle devices comprising an annular nozzle passage formed by a gap between two opposing wall members and a rotation conversion mechanism for adjusting said gap by converting an actuating rotational movement of said mechanism into a translatory movement of one of said wall members.

According to the generic prior art disclosed in US-A-6 139 262, in a variable nozzle for a turbocharger, an annular passage is adjusted by adjusting the gap between two walls forming the passage. The gap is adjusted by a rotation conversion mechanism which converts a rotation into a translatory movement. Therefore, the actuating mechanism can be provided for one of moving elements.

It is the object of the present invention to provide a variable nozzle device applicable to a compressor and/or an exhaust gas turbine of a turbocharger with an improved operation range and an increased efficiency.

It is a particular aim of the invention to provide a variable nozzle device applicable to a compressor and/or an exhaust gas turbine of a turbocharger which is compact, easy to manufacture and has high operational reliability.

The object of the invention is solved by a variable nozzle device according to the combination of the features defined in claim 1. According to the invention there are also provided a compressor, an exhaust gas turbine and a turbocharger comprising such a variable nozzle device.

Preferable embodiments of the invention are set forth in the dependent claims.

The object of the invention is achieved by a variable nozzle device in which the rotation conversion mechanism comprises a stationary backplate rotatably supporting a thrust member carrying displacing means, and an actuating device for rotating the thrust member relatively to the movable wall member so as to displace the movable wall member toward the other wall member. The movable wall member is arranged on the stationary backplate such that the movable wall member is displaceable in the direction of the rotational axis of the thrust member and incapable of rotating relative to said stationary backplate. The displacing means comprise at least a pair of ramp portions provided on surfaces of the thrust member and the movable wall member axially facing each other, respectively, wherein the ramp portions are abutted against each other along axially inclined surfaces.

According to the invention, the movable wall member can be formed in a compressor as a kind of movable backplate. By rotating the movable backplate with respect to the stationary backplate, a threaded movement is enabled so as to screw the movable backplate along the rotational axis thereof. By setting the pitch of the threading to an appropriate value, the relation between the rotation and the displacement can be adjusted. The same applies, however, also to the use of the inventive variable nozzle device in an exhaust gas turbine.

In embodiments where the movable backplate is rotated by an electric motor through a gear mechanism the control system of the variable nozzle device is simplified, particularly by using a step motor. The electric motor can, however, be .. replaced by any other drive means such as a hydraulic system or a solenoid mechanism.

According to a further embodiment of the present invention, the movable wall member or movable backplate comprises a latch portion which is formed by a recess. Preferably, a crank mechanism is provided at the stationary backplate so as to engage with said latch portion. The crank mechanism comprises a cam, which is swingable by moving an actuating lever through a shaft, wherein said shaft connects the cam with the actuating lever. The cam is engageable with the latch portion. With this structure, the movable backplate can be rotated about its rotational axis by actuating the crank or gear mechanism, whereby the backplate is also moved along its rotational axis.

In the variable nozzle device according to the second aspect of the invention, a spring member is preferably provided between the stationary backplate section and said movable backplate so as to press said movable backplate towards said rotation section. Thereby, the movable backplate is returned automatically to the initial position due to the returning of the rotation section to the initial position.

Preferably, the rotation of said rotation section relative to said stationary backplate is achieved by a gear mechanism. Preferably, said gear mechanism comprises a geared portion which is provided at the rotation section and a drive gear which is in meshing engagement with said geared portion and drivable by an electric motor.

With this construction, the rotation section is rotated by an electric motor through a gear mechanism. The rotation by said electric motor simplifies the control system of the variable nozzle device, in particular by using an electric control system. The electric motor can, however, be replaced by any other drive means such as a hydraulic system or a solenoid mechanism.

Preferably, said rotation section comprises a latch portion which is formed by a recess which is bounded by two protrusions. Preferably, said latch portion is formed at a circumference of said rotation section. Preferably, a crank mechanism is provided at the stationary backplate and engageable with said latch portion.

Preferably, said crank mechanism comprises a cam which is swingable by moving an actuating lever through a shaft, wherein said shaft connects said cam with said actuating lever. Preferably, said cam is engageable with said latch portion.

the crank mechanism has a simple structure for applying a force to the rotation section.

Preferably, at least one sealing member is disposed between said movable backplate and said stationary backplate so as to provide a sealing there between. Thereby, a fluid leakage between the movable members of the variable nozzle device can be prevented.

Preferably, fixed and/or movable vanes are provided in said annular passage. In particular, the structure of the annular passage is not limited to the structure as shown in the Figures. As a further option, both wall members can be movable or displaceable so as to adjust the width of the nozzle passage.

According to a further aspect of the present invention, a compressor comprising a compressor wheel for compressing a fluid comprises a variable nozzle device according to the preceding aspect and modifications.

According to a further aspect of the present invention an exhaust gas turbine comprises a turbine wheel and a variable nozzle device according to the preceding aspect and modifications.

According to a further aspect of the present invention, a turbocharger comprises a compressor and/or an exhaust gas turbine as defined above.

Preferable embodiments of the present invention are described in greater detail with reference to the drawings.

### BRIEF DESCRIPTION OF THE DRAWINGS

Fig. 1 shows a stationary backplate according to a comparative example which is not part of the invention.
Fig. 2 shows a movable backplate according to the comparative example .
Fig. 3 is a bottom view of the stationary backplate shown in Fig. 1.
Fig. 4 is a cross-sectional view of the stationary backplate along a line A-A in Fig. 3.
Fig. 5 is a top view of the stationary backplate of Fig. 1.
Fig. 6 is a partial cross-sectional view of the stationary backplate along a line B-B of Fig. 3.
Fig. 7 is a top view of a movable backplate according to the comparative example .
Fig. 8 is a cross-sectional view of the movable backplate along a line A-A in Fig. 7.
Fig. 9 is an exploded view of a variable nozzle device according to the comparative example.
Fig. 10 shows the variable nozzle device of Fig. 9 in the assembled state, wherein the diffuser gap is closed.
Fig. 11 shows the variable nozzle device of Fig. 9 in the assembled state, wherein the diffuser gap is open.
Fig. 12 is an explanatory view of the variable nozzle device according to the comparative example.
Fig. 13 is an exploded view of the variable nozzle device according to a first embodiment of the invention.
Fig. 14 shows the variable nozzle device of Fig. 13 in the assembled state, wherein the diffuser gap is opened.
Fig. 15 shows the variable nozzle device of Fig. 13 in the assembled state, wherein the diffuser gap is closed.
Fig. 16 is an explanatory view of the variable nozzle device according to the first embodiment.
Fig. 17 is a schematic view of the rotation conversion mechanism according to the first embodiment in a closed position.
Fig. 18 is a schematic view of the rotation conversion mechanism according to the first embodiment in an open position.
Fig. 19 shows a variable nozzle device according to a further comparative example which is not part of the invention.

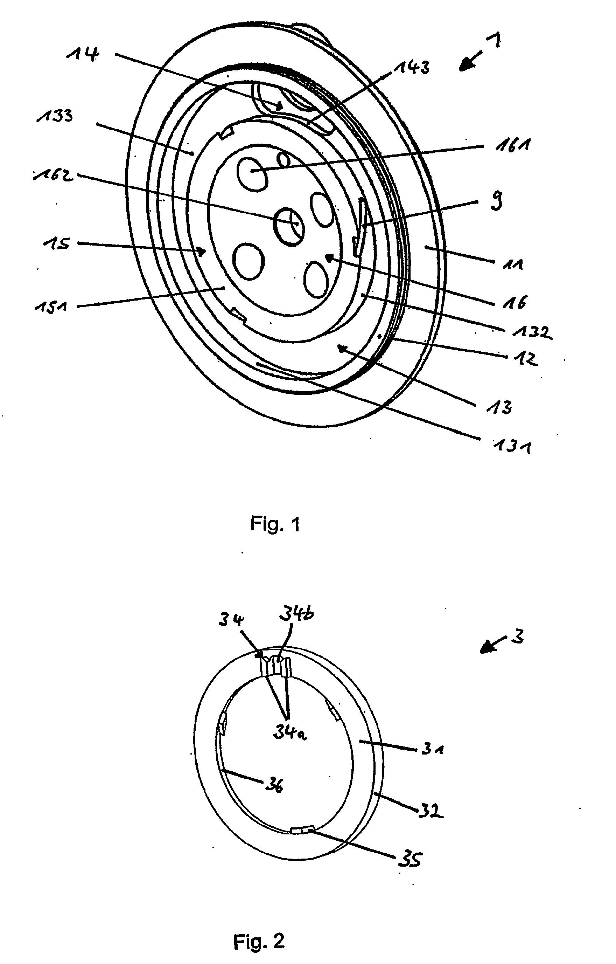

A comparative example which is not part of the present invention is explained with reference to Figs. 1 to 12.

### COMPARATIVE EXAMPLE

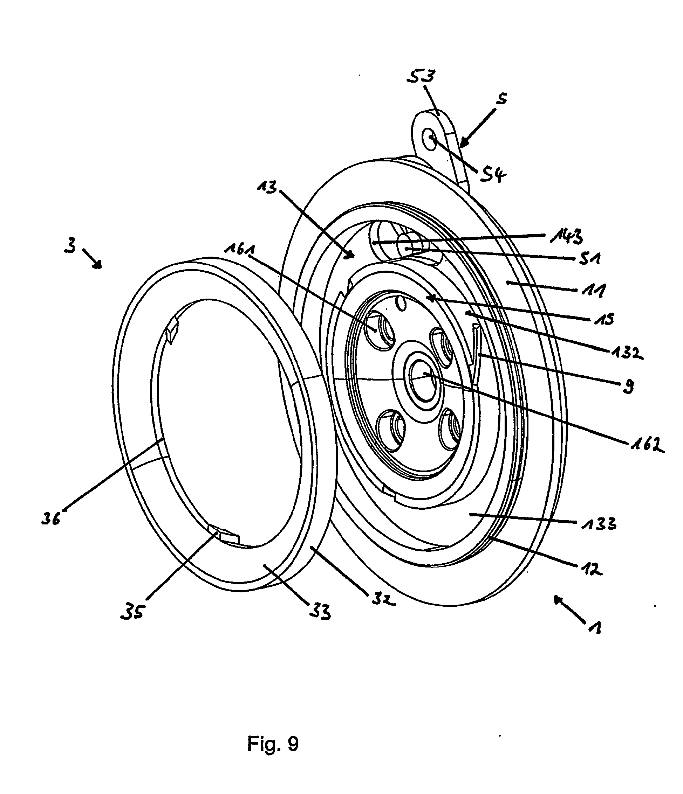

A variable nozzle device according to the comparative example includes a stationary backplate 1, a movable wall member (rotatable backplate) 3 and a cam mechanism 5 as shown in Fig. 9. A stationary backplate 1 serving as a stationary wall member and a movable backplate 3 serving as a movable wall member are explained with reference to Figs. 1 to 8. The stationary backplate according to the comparative example is shown in Fig. 1.

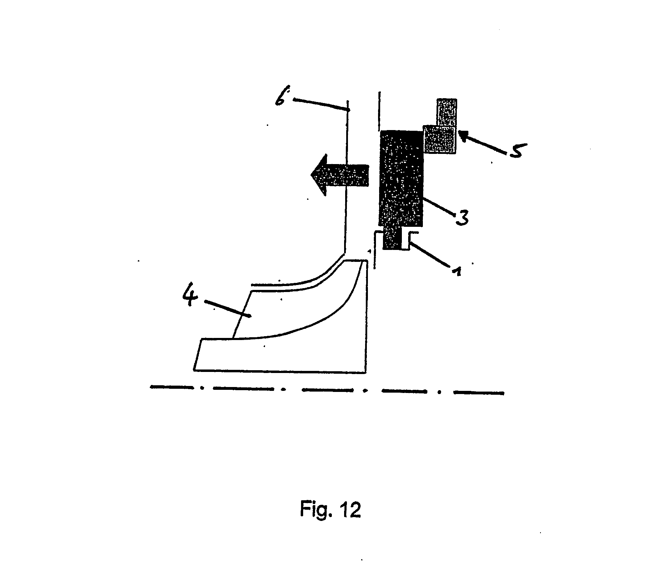

In Fig. 1, the stationary backplate 1 is shown from a side which faces towards a compressor wheel 4 shown in Fig. 12 when the variable nozzle device is incorporated in a turbocharger the compressor portion of which is illustrated in this Figure.

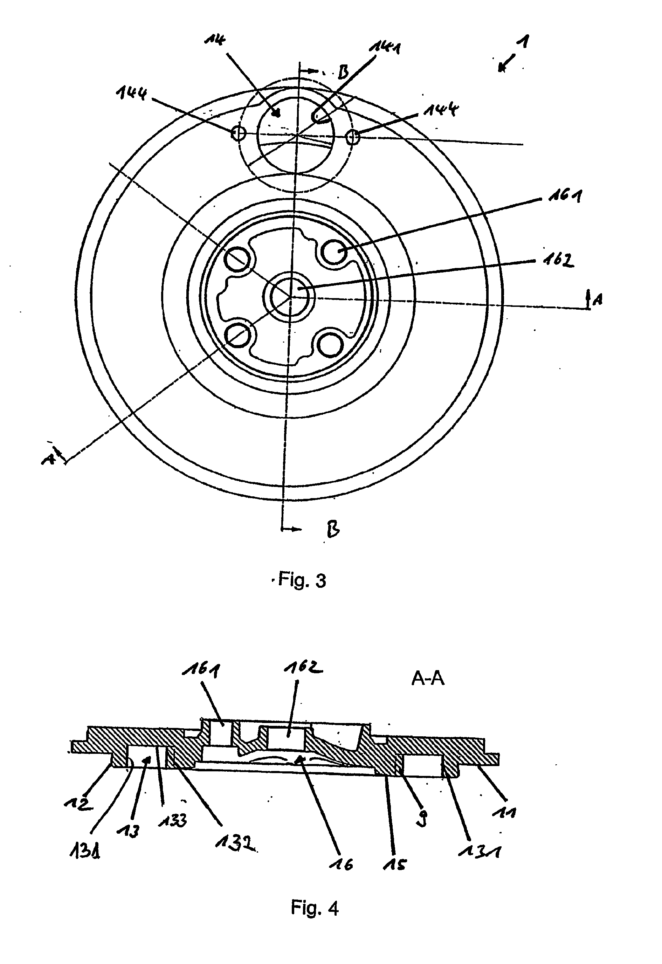

As particularly shown in Figures 1 and 4, the stationary backplate 1 is formed as a substantially circular member which is adapted to be mounted on the compressor side of a turbocharger. For mounting the stationary backplate 1 to the center housing of the turbocharger, a flange portion 11 is formed at the radially outermost periphery of the stationary backplate 1. A stepped portion 12 is formed radially inside the flange portion 11 so as to provide means for aligning a center axis of the stationary backplate 1 with a center axis of the compressor wheel of the turbocharger. In particular, the stepped portion 12 is adapted to engage with a recessed portion of the turbocharger housing on the compressor side, thereby aligning the center lines of the compressor wheel and the stationary backplate 1, respectively.

An accommodation groove 13 is formed radially inside the stepped portion 12 for forming an annular groove 13 for accommodating the movable wall member 3. The accommodation groove 13 is defined by a radially outer wall 131, a radially inner wall 132 and a bottom wall 133. A crank opening 14 is formed at a predetermined location penetrating the bottom wall 133.

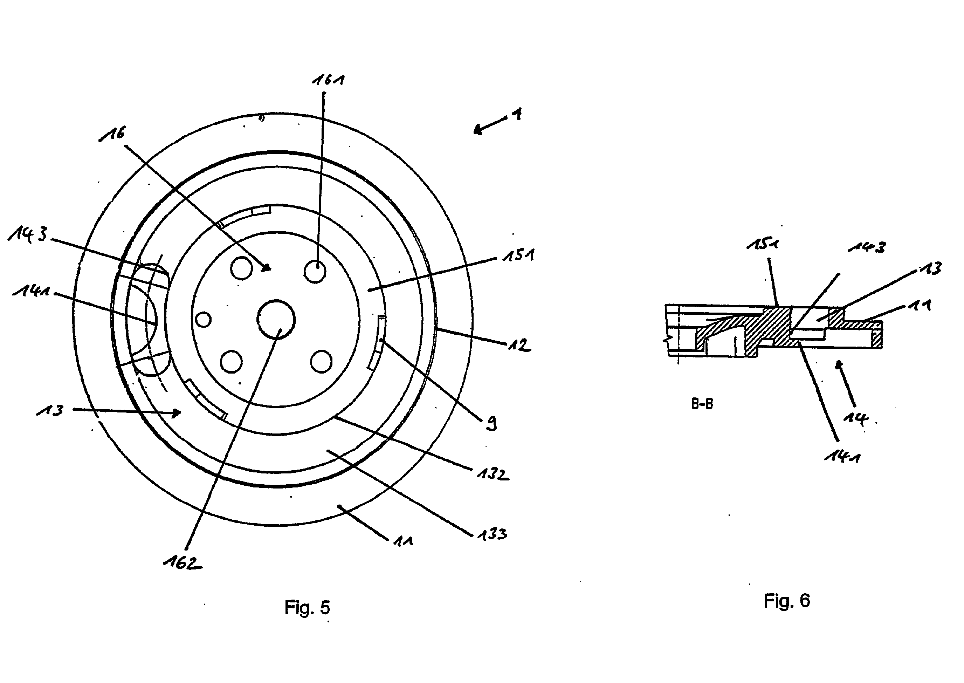

A boss portion 15 is formed radially inside the accommodation groove 13. The boss portion 15 has an annular shape and comprises a ring shaped surface 151 which is substantially plane and slightly conical, as shown in Fig. 5. The radially inner wall 132 of the accommodation groove 13 forms the radially outer wall of the boss portion 15.

In the radially inner wall 132 of the accommodation groove 13, engagement recesses 9 are formed. Each of the engagement recesses 9 is formed in the shape of a helicoidal slit with a rectangular cross-section and extends from the ring-shaped surface 151 towards the bottom wall 133 of the accommodation groove 13. Thus, the center axis of the helix created by the recesses 9 coincides with the center axis of the stationary backplate 1. In the present example, three engagement recesses 9 are formed in the stationary backplate 1 at regular angular intervals.

The stationary backplate 1 further comprises a concave center portion 16 which is formed radially inside the boss portion 15. The center portion 16 merges into the ring-shaped surface 151 of the boss portion 15. As already mentioned above, the ring-shaped surface 151 of the boss portion 15 is substantially plane, whereas the surface of the concave center portion 16 is bulged toward the direction away from the compressor wheel 4 shown in Fig. 12.

In the concave center portion 16, a plurality of holes 161 are forme which are blind holes in this example. In the present example, four blind holes 161 are formed at regular angular intervals around the axis of the backplate 1. A single support hole 162 is formed in a central area of the center portion 16. The support hole 162 is provided for supporting a shaft of the compressor wheel 4 through a bearing (not shown).

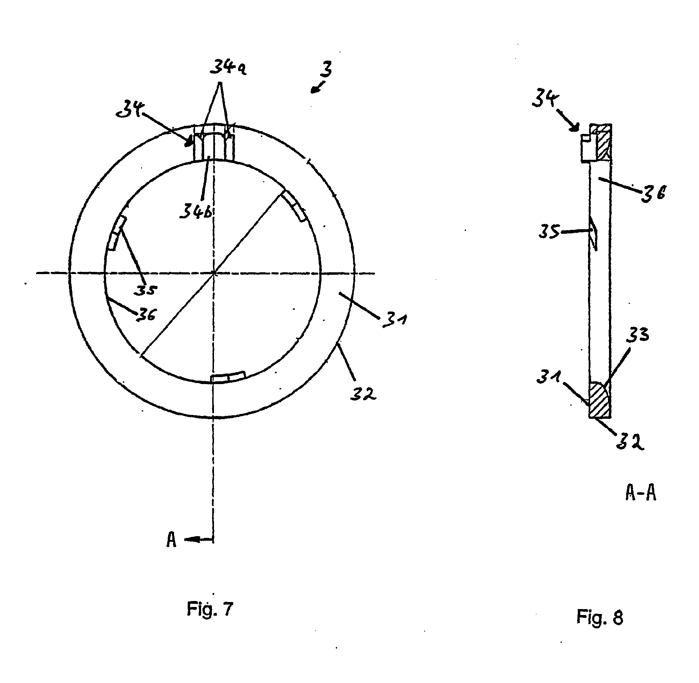

Fig. 2 shows a backplate 3 serving as a movable wall member according to the present example. As can be seen in Fig. 2 and Figures 7-8, the movable wall member 3 is formed as a ring comprising a radial outer surface 32, an axial surface 31 and a contour portion 33. The axial surface 31 is substantially plane. The radial outer surface 32 is substantially cylindrical and flat. As can be seen best in Fig. 8, the contour portion 33 is of a smooth round shape forming a connection between the radial outer surface 32 and the axial surface 31.

A latch portion 34 is formed at a predetermined angular position on the axial surface 31. The latch portion 34 according to the present example is formed by two substantially radially extending protrusions 34a with a recess 34b being formed between said protrusions 34a. These two opposing protrusions extend substantially parallel to each other as particularly shown in Fig. 7.

A plurality of tongue members in the form of guide protrusions 35 are formed on the contour portion 33 of the movable wall member 3 and protrude radially toward the geometrical axis of the movable wall member 3. In the present example, three guide protrusions 35 are formed on the movable backplate 3 in accordance with the number of engagement recesses 9 formed on the stationary backplate 1.

The crank opening 14 formed in the stationary backplate 1 is illustrated in more detail in Figures 5 and 6. As can be seen in Fig. 6, the crank opening 14 is formed by two axially overlapping holes 141 and 143 with the overlapping portion thereof forming the actual opening portion of the crank opening 14. A large diameter hole 141 is formed on the rear side of the stationary backplate 1 opposite to the compressor wheel side thereof. The large diameter hole 141 is in particular circular and extends towards about half of the thickness of the stationary backplate 1. The large diameter hole 141 merges into an elongated hole 143 which is formed in the bottom wall 133 of the accommodation groove 13.

The large diameter hole 141 and the elongated hole 143 form the crank opening 14 which penetrates through the stationary backplate 1. The crank opening 14 is adapted to accommodate and support a crank mechanism 5 which is particularly shown in Figs. 9 to 11. The crank mechanism 5 comprises a cam 51 carried by a shaft 52 which is rotatably supported in the large diameter hole 141 shown in Figs. 3, 5 and 6. On the side of the shaft 52 opposite to the cam 51, an actuating lever 53 is attached so that by moving the actuating lever 53, the cam 51 can swing in the elongated hole 143. For operating the actuating lever 53, an actuating hole 54 is provided at the distal portion of the actuating lever 53. According to the invention, the cam 51 serves as an actuating device.

In the following the assembling and the function of the variable nozzle device according to the comparative example will be described with particular reference to Figs. 9 to 11.

As can be seen in Fig. 9, the movable wall member 3 is arranged in axial alignment with the stationary backplate 1 such as to be inserted into the accommodation groove 13 of the stationary backplate 1. The movable wall member 3 is inserted into the accommodation groove 13 such that the latch portion 34 faces towards the compressor wheel 4 side of the stationary backplate 1 and is opposed to the crank opening 14, thus enabling the latch portion 34 to fit into the crank opening 14, in particular into the elongated hole 143. The surfaces of the movable wall member 3 and of the stationary backplate 1, which are in contact with each other, are formed with a surface property and are provided with dimensions such that the surfaces can be moved relative to each other with a low frictional resistance.

The movable wall member 3 is inserted into the accommodation groove 13 of the stationary backplate 1 by threadably engaging the guide protrusions 35 formed at the movable wall member 3 with the engagement recesses 9 formed in the stationary backplate 1. While the movable wall member 3 is threaded into the groove 13 the latch portion 34 of the movable wall member 3 simultaneously engages with the cam 51 which is thus swung in a position within the elongated hole 143, which corresponds to the progress of threading. Since the cam 51 remains engaged with the latch portion 34 of the movable wall member 3 during operation, the cam serves also as means for locking the movable wall member 3 on the stationary backplate 1.

Due to the engagement of the crank portion 51 with the latch portion 34, the movable (rotatable) wall member 3 is rotated with respect to the stationary backplate 1 about the center axis of the stationary backplate 1 by a movement of the actuating lever 53. Since the guide protrusions 35 are threadably engaged with the engagement recesses 9, the movable wall member 3 is moved or displaced in the axial direction with respect to the stationary backplate 1 by the rotation of the movable wall member 3 relative to the stationary backplate 1. That is, by operating the actuating lever 53, the movable wall member 3 can be expanded and retracted, respectively, with respect to the stationary backplate 1.

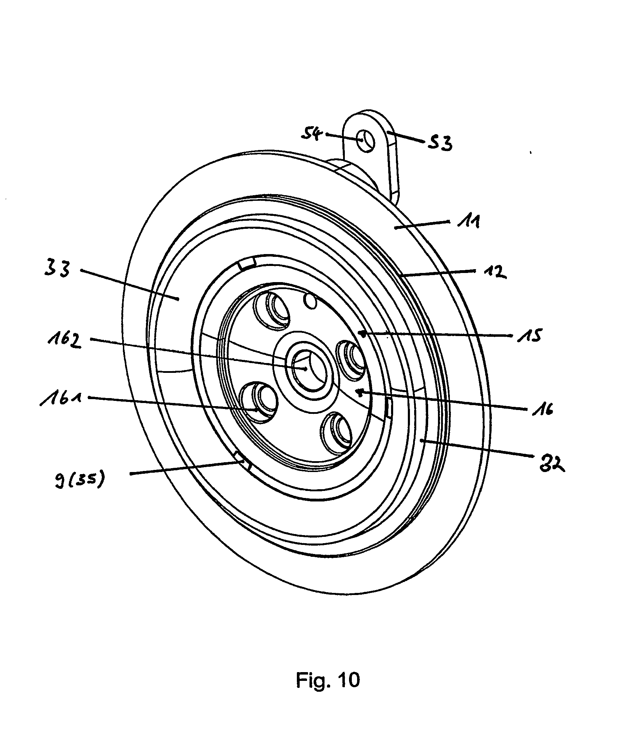

The operation of the variable nozzle device according to the present comparative example is particularly illustrated by Figs. 10 to 12. Fig. 10 shows the variable nozzle device in a position where the movable wall member 3 is in a most expanded position with respect to the stationary backplate 1. In this position, the movable wall member 3 is expanded towards a diffuser wall 6 forming a wall member and compressor wheel 4 which is shown in Fig. 12. In this way, the gap formed in cooperation with the fixed diffuser wall 6 for passing the intake air to be compressed is closed.

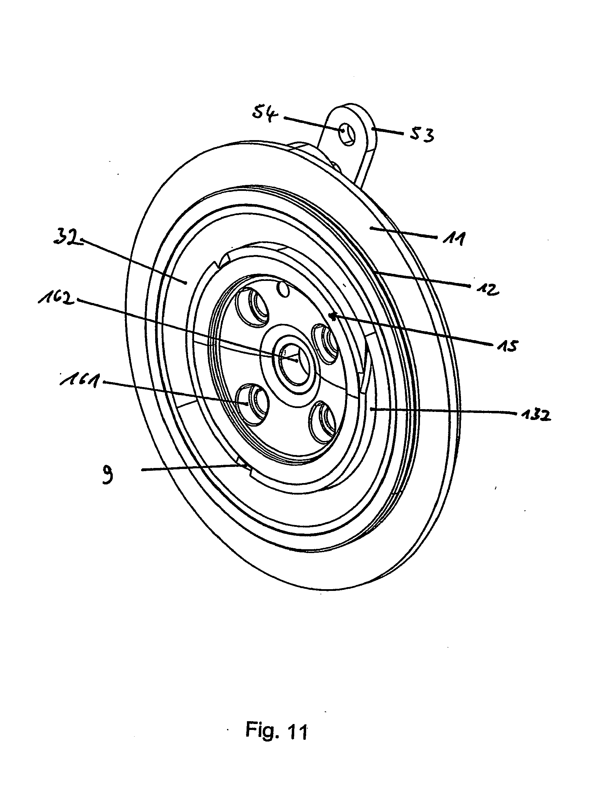

As shown in Fig. 11, the movable wall member 3 is in the most retracted position such that the movable wall member 3 is moved away from the diffuser wall 6 and the compressor wheel 4. Thereby, the gap for passing the fluid to be compressed is placed in an opened position.

By changing the position of the movable wall member 3, the diffuser gap position can be adapted to the current operational conditions of the internal combustion engine and of the turbocharger. That is, the surge flow limit as well as the compressor choke can be suppressed such that the operational range of the turbocharger can be widened. In particular, the diffuser flow area can be set to different values to suit different air mass flow rates and/or rotational speeds of the compressor wheel in response to varying operational conditions of the internal combustion engine.

### FIRST EMBODIMENT OF THE PRESENT INVENTION

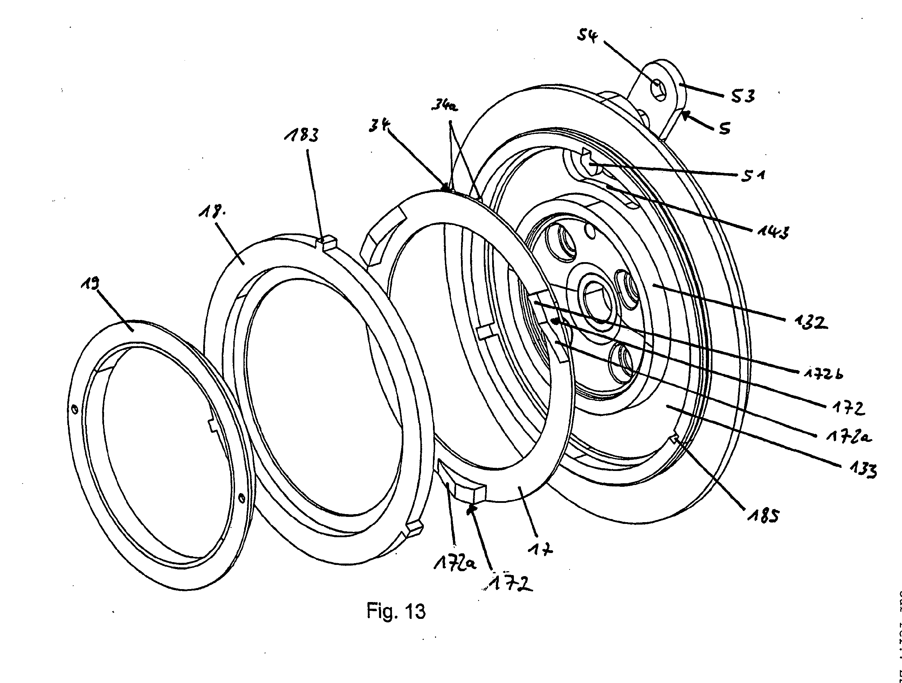

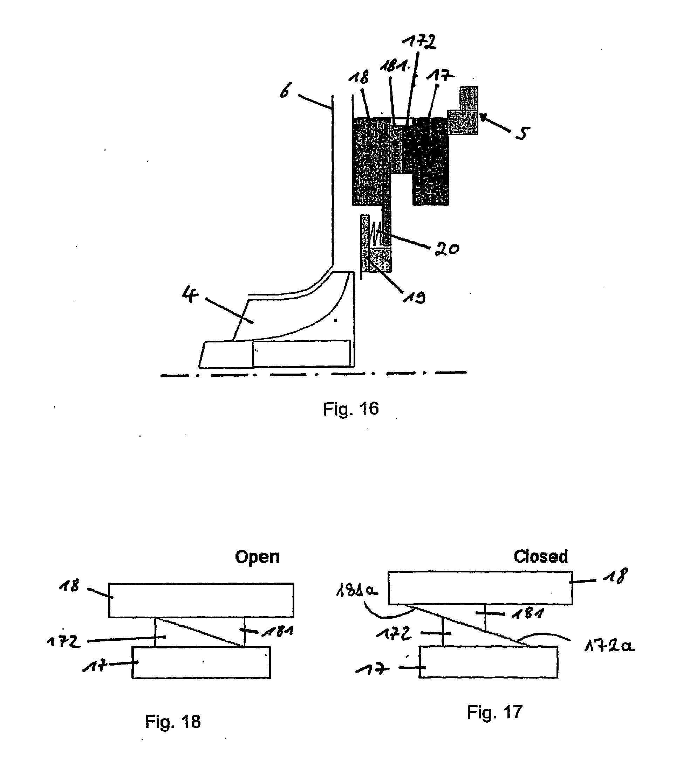

Figs. 13-15 schematically show a variable nozzle device according to the first embodiment of the present invention. Figs. 16-18 are further explanatory drawings showing the first embodiment. Since the variable nozzle device according to the first embodiment is similar to the variable nozzle device according to the comparative example, merely the differences thereof are explained in the following. Furthermore, similar elements are indicated by the same reference numerals.

The stationary backplate 1 is constructed similarly as in the comparative example except that the helical recesses 9 are not formed on the inner wall 132 of the accommodation groove 13.

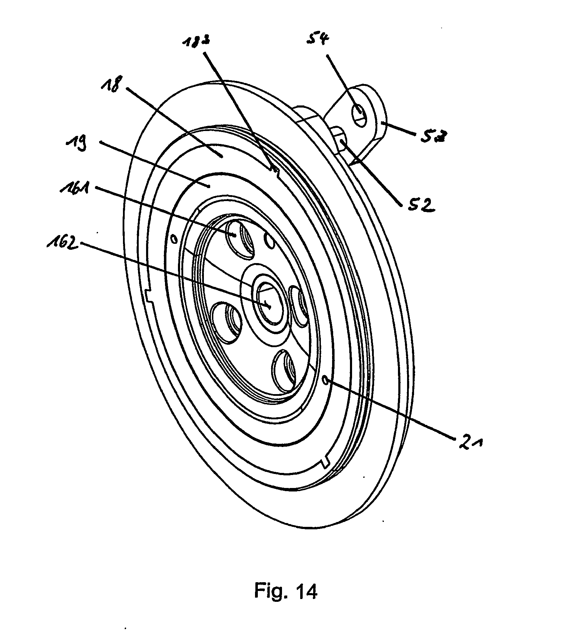

In the accommodation groove 13, a thrust member formed as a rotation section 17 is inserted such that the rotation section 17 is rotatable with respect to the stationary backplate 1. A latch portion 34 comprising the protrusions 34a and the recess 34b is formed in the rotation section 17, with the recess 34b separating the protrusions 34a, thus forming an engagement groove. The latch portion 34 is formed on the surface facing towards the compressor side, in particular towards the compressor wheel 4 which is shown in Fig. 14. On the surface 171, three ramps 172 (ramp portions) are formed at regular circumferential positions. The ramps comprise axially inclined oblique surfaces 172a which elevate from the surface 171 into the rotational direction of the rotation section 17. Furthermore, the ramps 172 include flat portions 172b which are substantially parallel with respect to the surface 171 and which merge directly with the oblique surfaces 172a.

An axially movable section 18 is provided facing the rotation section 17 and, in particular, facing the surface 171 of the rotation section 17. On the side of the axially movable section 18, three ramps 181 comprising oblique surfaces 181a are formed corresponding to the ramps 171 formed on the rotation section 17.

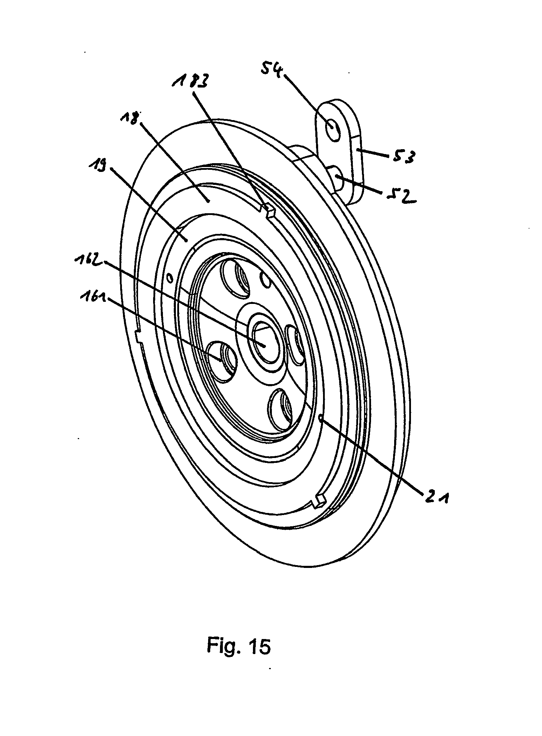

The axially movable section 18 is only movable in the axial direction and prevented from rotating by means of axial tongues 183 provided at the radial outer diameter of the axially movable section 18 and by means of axial notches 185 provided on the inner peripheral side of the accommodation groove 13, as shown in Figs. 14 and 15.

On the side of the axially movable section 18 which faces towards the compressor wheel 4 shown in Fig. 14, a stationary section 19 is provided. This stationary section is held both rotationally and axially by an engagement with the stationary backplate 1. Between the stationary section 19 and the axially movable section 18, a spring member 20 is provided so as to urge the axially movable section 18 constantly towards the stationary backplate 1. The spring member is held by spring member supports 21 which are formed at the stationary section 19. In the present embodiment, the spring member supports 21 are formed as holes in the stationary section 19.

The operation of the variable nozzle device according to the first embodiment of the present invention is explained with reference to Figs. 16 to 18. In Fig. 16, the variable nozzle device is schematically shown. Between the fixed diffuser wall 6 and the axially movable section 18, a gap is formed for passing the compressed fluid, e.g. the intake air, from the compressor wheel 4 towards an outlet port. By operating the crank mechanism 5, the rotation section 17 is rotated by a predetermined angular amount. Thereby, the ramps 172 are moved relative to the ramp engagement portions 181 formed on the axially movable section 18. Since the axially movable section 18 is merely movable in the axial direction and is held at a constant rotational position with respect to the stationary backplate 1, the axial position of the axially movable section 18 relative to the stationary backplate 1 and also relative to the fixed diffuser wall 6 is changed. That is, by operating the crank mechanism 5, the gap between the fixed wall 6 and the axially movable section 18 is changed due to the sliding movement of the oblique portions 172a of the ramps 172 relative to the ramp engagement portions 181.

The spring 20 continuously exerts a force on the axially movable section 18 such that the axially movable section 18 is moved towards the stationary backplate 1, if the crank mechanism is moved to open the gap between the fixed diffuser wall 6 and the movable diffuser wall. That is, the axially movable section 18 is pressed towards the stationary backplate 1, and a close contact between the ramps 172 and the ramp engagement portions 181 is always kept.

If the rotation of the rotation section is continued, the flat portions 172b reach the ramp engagement portions 181 thus stopping the further displacement of the axially movable section 18.

The effects of the first embodiment are substantially the same as those of the comparative example. In particular, it is possible to change the gap for passing the compressed fluid, i.e. the intake air, from the compressor wheel 4 to ensure an optimum geometry on the compressor side. Thereby, the diffuser flow is stabilized and the compressor surge can be delayed which, in turn, increases the operational range of the compressor.

### FURTHER COMPARATIVE EXAMPLE

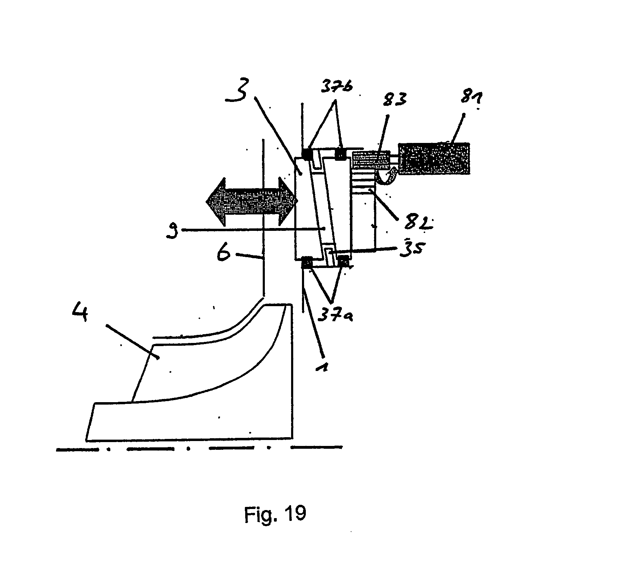

A further comparative example which is not part of the present invention is described with reference to Fig. 19.

Fig. 19 schematically shows a variable nozzle device according to the further comparative example. Since the actuating mechanism according to the further comparative example is similar to the variable nozzle device according to the first embodiment of the present invention, or the previous comparative example, wereby the differences thereof will be explained in the following description. Furthermore, similar elements are indicated by the same reference numerals.

The present comparative example is similar to the previous comparative example except that the helical recess 9 is not formed on the outer wall 132 of the accommodation groove 13 but on the radial outer surface 32 of the movable wall member 3 and also on the radial inner surface 36 thereof. Furthermore, the guide protrusions 35 are formed on the inner wall 132 and the outer wall 131 of the accommodation groove 13 where the movable wall member 3 is slidably held.

Additionally, inner sealing members 37a and outer sealing members 37b are formed on the radial inner surface 36 and the radial outer surface 32 of the movable wall member 3, respectively. The inner sealing members 37a and the outer sealing members 37b seal against the inner wall 132 and the outer wall 131 of the accommodation groove 13 such that the flow or leakage of the fluid, e.g. of the intake air, can be suppressed.

As in the first embodiment according to the present invention and the previous comparative example, the movable diffuser wall at the movable wall member 3 can be moved relative to the fixed diffuser wall 6. For improving this movement, the sealing members 37a, 37b are capable of sliding against the contacted surfaces.

According to the present comparative example, the rotation of the movable wall member 3 is accomplished by a gear mechanism 8 comprising an electric motor 81, a geared portion 82 on the circumferential portion of the movable wall member 3 and a drive gear 83 which is connected with the electric motor 81.

By driving the electric motor 81, the drive gear 83, which is in meshing engagement with the geared portion 82, rotates the movable wall member 3 by a predetermined angular amount.

The rotation of the movable wall member 3 by driving the electric motor 81 can be controlled by an electric circuit (not shown) in response to and in association with the basic engine control system. Thereby, the optimum position of the movable diffuser wall and the fixed diffuser wall 6 can be adjusted.

The effects of the present comparative example are substantially the same those of the first embodiment of the present of the present invention and the previous comparative example. In particular, it is possible to change the gap for passing the compressed fluid, i.e. the intake air, from the compressor wheel 4 to ensure an optimum geometry at the compressor side. Thereby, the diffuser flow is stabilized and the compressor surge can be delayed which, in turn, increases the operational range of the compressor.

### MODIFICATIONS

The present invention is not limited to the first embodiment.

Although the number of the engagement recesses 9 and of the ramps 172 is defined to three, more or less engagement recesses 9 or ramps 172 can be formed.

Although the gear mechanism for driving the movable wall member 3 is only defined in the comparative example of Figs.19, the gear mechanism can also be used in the first embodiment of the invention, wherein the crank mechanism is replaced by the gear mechanism.

## Claims

1. A variable nozzle device comprising:
an annular nozzle passage formed by a gap between two opposing wall members (18, 6); and
a rotation conversion mechanism (172, 181) for adjusting said gap by converting an actuating rotational movement of said mechanism into a translatory movement of at least one of said wall members (18, 6), said rotation conversion mechanism comprising a stationary backplate (1) rotatably supporting a thrust member (17) carrying displacing means, and an actuating device (51) for rotating the thrust member (17) relative to the movable wall member (18) so as to displace said movable wall member toward the other wall member (6), said movable wall member (18) being arranged on said stationary backplate (1) such that it is displaceable in the direction of the rotational axis of said thrust member (17) and incapable of rotating relative to said stationary backplate (1),
**characterized in that**
said displacing means comprise at least a pair of ramp portions (172, 181) provided on surfaces of said thrust member (17) and said movable wall member (18) axially facing each other, respectively, said ramp portions being abutted against each other along axially inclined surfaces (172a, 181a).

2. The variable nozzle device according to claim 1, wherein the rotation of said movable wall member (18) relative to said stationary backplate (1) is achieved by a gear mechanism (8).

3. The variable nozzle device according to claim 2, wherein said gear mechanism (8) comprises a geared portion (82) which is provided at the movable wall member (18) and a drive gear (83) which is in meshing engagement with said geared portion (82) and drivable by an electric motor (81).

4. A compressor comprising a variable nozzle device according to one of claims 1 to 3 and a compressor wheel (4) for compressing a fluid through the annular nozzle passage of said variable nozzle device.

5. An exhaust gas turbine comprising a variable nozzle device according to one of claims 1 to 3 and a turbine wheel which is drivable by exhaust gas passed through the annular nozzle passage of said variable nozzle device.

6. A turbocharger comprising a compressor according to claim 4 and/or an exhaust gas turbine according to claim 5.

## Patentansprüche

1. Verstellbare Düsenvorrichtung mit:
einer ringförmigen Düsenpassage, die durch einen Spalt zwischen zwei gegenüberliegenden Wandbauteilen (18, 6) ausgebildet ist; und
einem Drehumwandlungsmechanismus (172, 181) zum Einstellen des Spalts durch Umwandeln einer Betätigungsdrehbewegung des Mechanismus in eine translatorische Bewegung von wenigstens einem der Wandbauteile (18, 6), wobei der Drehumwandlungsmechanismus eine stationäre Rückplatte (1), die ein eine Verschiebungseinrichtung tragendes Druckbauteil (17) drehbar abstützt, und eine Betätigungsvorrichtung (51) zum Drehen des Druckbauteils (17) relativ zu dem beweglichen Wandbauteil (18) aufweist, um das bewegliche Wandbauteil in Richtung zu dem anderen Wandbauteil (6) zu bewegen, wobei das bewegliche Wandbauteil (18) derart an der stationären Rückplatte (1) angeordnet ist, dass es in der Richtung der Drehachse des Druckbauteils (17) verschiebbar ist und nicht relativ zu der stationären Rückplatte (1) drehen kann,
**dadurch gekennzeichnet, dass**
die Verschiebungseinrichtung wenigstens ein Paar Rampenabschnitte (172, 181) aufweist, die entsprechend an einander in axialer Richtung zugewandten Flächen des Druckbauteils (17) und des beweglichen Wandbauteils (18) vorgesehen sind, wobei die Rampenabschnitte entlang axial geneigter Flächen (172a, 181a) aneinander anliegen.

2. Verstellbare Düsenvorrichtung nach Anspruch 1, wobei die Drehung des beweglichen Wandbauteils (18) relativ zu der stationären Rückplatte (1) durch einen Getriebemechanismus (8) bewirkt wird.

3. Verstellbare Düsenvorrichtung nach Anspruch 2, wobei der Getriebemechanismus (8) einen Verzahnungsabschnitt (82), der an dem beweglichen Wandbauteil (18) vorgesehen ist, und ein Antriebsrad (83) aufweist, das mit dem Verzahnungsabschnitt (82) in Eingriff ist und durch einen Elektromotor (81) angetrieben werden kann.

4. Verdichter mit einer verstellbaren Düsenvorrichtung nach einem der Ansprüche 1 bis 3 und einem Verdichterrad (4) zum Verdichten eines Fluids durch die ringförmige Düsenpassage der verstellbaren Düsenvorrichtung.

5. Abgasturbine mit einer verstellbaren Düsenvorrichtung nach einem der Ansprüche 1 bis 3 und einem Turbinenrad, das durch ein Abgas antreibbar ist, das durch die ringförmige Düsenpassage der verstellbaren Düsenvorrichtung hindurchgeht.

6. Turbolader mit einem Verdichter nach Anspruch 4 und/oder einer Abgasturbine nach Anspruch 5.

## Revendications

1. Dispositif de tuyère variable comportant:
un passage de tuyère annulaire formé par un intervalle entre deux éléments (18, 6) de paroi opposés ; et
un mécanisme (172, 181) de conversion de rotation destiné à régler ledit intervalle en convertissant un mouvement de rotation d'actionnement dudit mécanisme en un mouvement de translation d'au moins un desdits éléments (18, 6) de paroi, ledit mécanisme de conversion de rotation comportant une plaque (1) d'appui fixe supportant de façon tournante un élément (17) de poussée portant des moyens de déplacement, et un dispositif (51) d'actionnement destiné à faire tourner l'élément (17) de poussée par rapport à l'élément mobile (18) de paroi de façon à déplacer ledit élément mobile de paroi en direction de l'autre élément (6) de paroi, ledit élément mobile (18) de paroi étant disposé sur ladite plaque (1) d'appui fixe de telle sorte qu'il puisse être déplacé dans la direction de l'axe de rotation dudit élément (17) de poussée et qu'il ne puisse pas tourner par rapport à ladite plaque (1) d'appui fixe,
**caractérisé en ce que**
lesdits moyens de déplacement comportent au moins une paire de parties (172, 181) de rampe aménagées sur des surfaces dudit élément (17) de poussée et dudit élément mobile (18) de paroi se faisant face axialement, respectivement, lesdites parties de rampes étant calées l'une contre l'autre le long de surfaces (172a, 181a) inclinées axialement.

2. Dispositif de tuyère variable selon la revendication 1, la rotation dudit élément mobile (18) de paroi par rapport à ladite plaque (1) d'appui fixe étant réalisée par un mécanisme (8) à engrenage.

3. Dispositif de tuyère variable selon la revendication 2, ledit mécanisme (8) à engrenage comportant une partie dentée (82) aménagée au niveau de l'élément mobile (18) de paroi et un pignon (83) d'entraînement engrenant avec ladite partie dentée (82) et susceptible d'être entraîné par un moteur électrique (81).

4. Compresseur comportant un dispositif de tuyère variable selon l'une des revendications 1 à 3 et une roue (4) de compresseur destinée à comprimer un fluide à travers le passage de tuyère annulaire dudit dispositif de tuyère variable.

5. Turbine à gaz d'échappement comportant un dispositif de tuyère variable selon l'une des revendications 1 à 3 et une roue de turbine susceptible d'être actionnée par des gaz d'échappement dirigés à travers le passage de tuyère annulaire dudit dispositif de tuyère variable.

6. Turbocompresseur comportant un compresseur selon la revendication 4 et / ou une turbine à gaz d'échappement selon la revendication 5.
